# EUROPÄISCHE PATENTSCHRIFT

(11) **EP 4 263 252 B1**
(45) Veröffentlichungstag und Bekanntmachung des Hinweises auf die Patenterteilung: **05.11.2025**
(21) Anmeldenummer: 21773759.2
(22) Anmeldetag: 08.09.2021
(51) Int. Cl.: B60J 1/10, B60J 1/17

(54) **FAHRZEUG, FAHRZEUGTÜR UND FENSTERBAUGRUPPE DAFÜR**
VEHICLE, VEHICLE DOOR AND WINDOW ASSEMBLY THEREFOR
VÉHICULE, PORTE DE VÉHICULE ET ENSEMBLE FENÊTRE POUR CELUI-CI

(30) Priorität: 16.12.2020 DE 102020216086
(43) Veröffentlichungstag der Anmeldung: 25.10.2023
(73) Patentinhaber: Stellantis Auto SAS, 78300 Poissy (FR)
(72) Erfinder: HORNECK, Michael, 65428 Rüsselsheim am Main (DE)
(74) Vertreter: BCIP
(86) Internationale Anmeldenummer: PCT/EP2021/074704
(87) Internationale Veröffentlichungsnummer: WO 2022/128185

(56) Entgegenhaltungen:
- JP-U- S57 109 172
- JP-U- S6 020 918
- JP-U- S6 439 130

## Beschreibung

Die vorliegende Erfindung betrifft eine Fahrzeugtür mit Fallfensterscheibe, eine Fensterbaugruppe zur Realisierung einer solchen Fahrzeugtür sowie ein mit der Fahrzeugtür oder der Fensterbaugruppe ausgestattetes Fahrzeug.

Das Ziehen eines Parkscheins beim Einfahren in ein Parkhaus oder auf einen Parkplatz ist selbst dann oft beschwerlich, wenn der Ausgabeschlitz des Parkscheinautomaten in einer Höhe angebracht ist, die an die Höhe eines Seitenfensters eines PKWs von üblichen Abmessungen angepasst ist. Häufig ist das Ziehen des Parkscheins zusätzlich durch eine Platzierung des Schlitzes in unmittelbarer Nähe der Gürtellinie des Fahrzeugs oder gar darunter erschwert, so dass der Fahrer selbst dann zu einer unbequemen Armhaltung gezwungen ist, wenn die Fallfensterscheibe maximal abgesenkt ist. Besonders störend ist dieses Problem bei Fahrzeugen mit hoch liegender Gürtellinie wie etwa SUVs, Kleinbussen oder -transportern. Hinzu kommt, dass die Fallfensterscheibe an den Türen solcher Fahrzeuge meist relativ hoch ist und es deswegen lange dauert, sie abzusenken.

Aus DE 10 2014 214 442 A1 ist ein Kraftfahrzeug mit einer Seitentür bekannt, bei der die Fensteröffnung in eine obere Fensteröffnung mit einer fest montierten Scheibe und eine untere Fensteröffnung mit einer Fallfensterscheibe unterteilt ist. Die Teilung dient dazu, Probleme beim mit dem Platzbedarf der Fallfensterscheibe zu vermeiden, die sich anderenfalls beim Absenken der Fallfensterscheibe in einen unteren Teil der Tür ergeben würden, wenn der untere Teil und die Fensteröffnung stark unterschiedlich zur Fahrzeugmitte hin geneigt sind.

Aus dem Stand der Technik sind J S60 20918 U, JP S64 39130 U sowie JP S57 109172 U bekannt.

Eine Aufgabe der vorliegenden Erfindung ist, eine Fahrzeugtür bzw. eine Fensterbaugruppe für eine Fahrzeugtür anzugeben, die eine kostengünstige Realisierung der Fahrzeugtür erlaubt und dem Fahrer eine effiziente Bedienung von Geräten außerhalb des Fahrzeugs wie etwa eines Parkscheinautomaten ermöglicht.

Die Aufgabe wird zum einen gelöst durch eine Fensterbaugruppe, die eine Fensterführung für eine Fallfensterscheibe mit einem in Einbaulage der Fensterbaugruppe in einer Fahrzeugtür vorderen und einem hinteren Führungsprofil, die an ihren oberen Enden durch ein oberes Führungsprofil verbunden sind, einen Träger, der mittlere Abschnitte des vorderen und des hinteren Führungsprofils verbindet, und eine zwischen dem oberen Führungsprofil und dem Träger eingefasste feste Fensterscheibe umfasst. Eine solche Fensterbaugruppe kann vorgefertigt und in einen Türrahmen eingefügt werden, der ansonsten einen herkömmlichen oder marginal angepassten Aufbau hat, was eine kostengünstige Realisierung der Tür, insbesondere als flankierend zu einer Tür ohne unterteiltes Fenster angebotenes Sondermodell, ermöglicht.

Damit der Träger die Sicht eines Fahrzeuginsassen ins Freie nicht behindert, gleichzeitig aber das Fenster auf genügend großer Fläche geöffnet werden kann, sollte der Abstand des Trägers zu unteren Enden des vorderen und des hinteren Führungsprofils größer sein als zu einem höchsten Punkt des oberen Führungsprofils.

Um die Baugruppe vor ihrem Einbau zu stabilisieren, sollte wenigstens ein Steg untere Bereiche des vorderen und des hinteren Führungsprofils verbinden. Der Steg kann so platziert sein, dass er nach dem Einbau in Höhe einer Gürtellinie der Tür zu liegen kommt, und er kann z.T. als ein Randprofil am unteren Rand der Fensteröffnung sichtbar bleiben. Er kann an einer Innen- oder Außenseite der Fallfensterscheibe anliegen; denkbar ist auch je ein Steg auf beiden Seiten der Fallfensterscheibe.

Der Träger sollte wenigstens eine Nut aufweist, die bündig an eine Nut des vorderen und des hinteren Führungsprofils anschließt, so dass die Ränder der Fallfensterscheibe in geschlossener Stellung und/oder der festen Fensterscheibe in das Führungsprofil und den Träger eingreifen können.

Die feste Fensterscheibe kann von einer umlaufenden, beispielsweise einteilig angespritzten, Dichtung eingefasst sein.

Alternativ kann das vordere und/oder das hintere Führungsprofil eine Dichtung umfassen, die den Träger kreuzt. Ein solches Dichtungsprofil kann den gleichen Verlauf aufweisen wie bei einer herkömmlichen Tür ohne den Träger.

Zur Verankerung an den Führungsprofilen hat erfindungsgemäß der Träger wenigstens einen in eine Nut des vorderen und/oder des hinteren Führungsprofils eingreifenden Finger und/oder einen an einer Innen- oder Außenseite des vorderen und/oder des hinteren Führungsprofils anliegenden Finger.

Zusätzlich ist erfindungsgemäß zur Verankerung ein Stift vorgesehen, z.B. eine Schraube oder ein Niet, vorgesehen sein, der den wenigstens einen Finger und das vordere und/oder hintere Führungsprofil kreuzt.

Eine von außen nicht sichtbare Verankerung des Trägers ist realisierbar, indem eine Spitze des in die Nut eingreifenden Fingers in eine Aussparung am Boden der Nut eingreift.

Die feste Fensterscheibe kann getönt sein, um den Kopf eines Fahrzeuginsassen vor übermäßiger Sonneneinstrahlung zu schützen. Eine solche Beschattung ist infolge der Zweiteilung des Fensters sogar dann möglich, wenn die Fallfensterscheibe abgesenkt ist.

Die Aufgabe wird ferner gelöst durch eine Fahrzeugtür mit einem eine Fensteröffnung aufweisenden oberen Teil, einem unteren Teil, einer der Fensteröffnung zugeordneten Fensterbaugruppe wie oben beschrieben und einer Fallfensterscheibe, die zwischen einer zumindest weitgehend in dem unteren Teil versenkten Offenstellung und einer an den Träger anschlagenden Offenstellung verstellbar ist.

Um die Fallfensterscheibe auch in der Offenstellung zu führen, können das vordere und/oder das hintere Führungsprofil über eine Unterkante der Fensteröffnung hinaus in den unteren Teil reichen.

Die Erfindung ist besonders zweckmäßig bei Türen, die, wie insbesondere für Kleinbusse und -transporter typisch, ein hohes Verhältnis von Höhe zu Breite der Fensteröffnung aufweisen. Bei einer erfindungsgemäßen Tür beträgt dieses Verhältnis vorzugsweise wenigstens 0,75, besser wenigstens 0,8, besonders bevorzugt wenigstens 0,85.

Gegenstand der Erfindung ist ferner ein Fahrzeug mit einer Fahrzeugtür oder einer Fensterbaugruppe wie oben beschrieben.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine Seitenansicht des Vorderteils eines Kleintransporters mit einer Fahrer- oder Beifahrertür gemäß der Erfindung;
- Fig. 2: eine erfindungsgemäße Fensterbaugruppe;
- Fig. 3: einen Querschnitt durch den Träger der Fensterbaugruppe;
- Fig. 4: einen Querschnitt durch einen Verbindungsbereich zwischen dem Träger und einem der Führungsprofile;
- Fig. 5: einen alternativen Querschnitt durch den Verbindungsbereich.

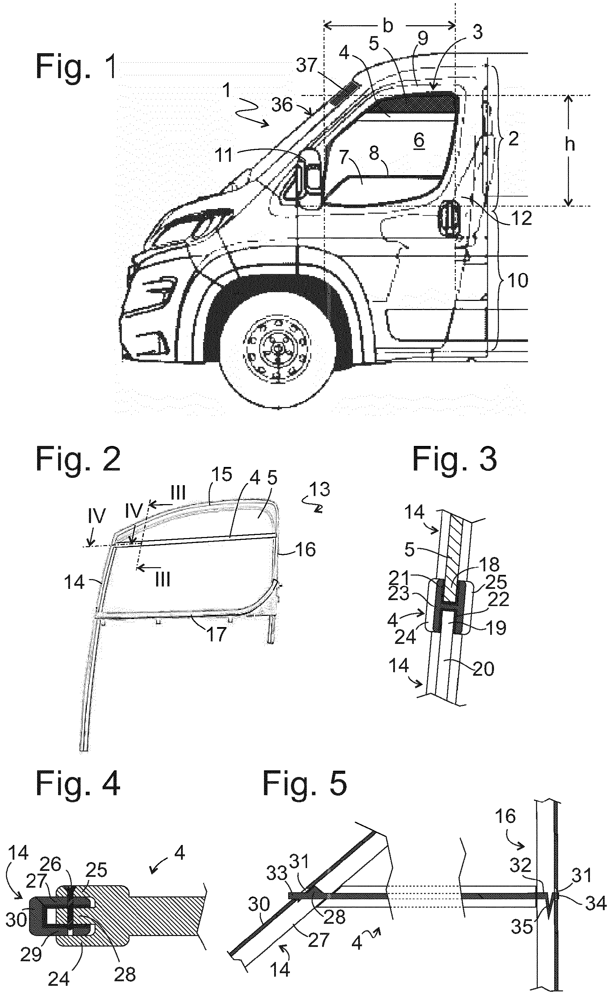

Fig. 1 zeigt den Vorderteil der Karosserie eines Kleintransporters mit einer Fahrzeugtür 1 in einer Seitenansicht. In einem oberen Teil 2 der Tür ist eine großflächige Fensteröffnung 3 ausgespart. Die Fensteröffnung 3 ist durch einen horizontalen Träger 4 unterteilt in einen oberen Abschnitt, in der eine feste Fensterscheibe 5 montiert ist, und einen unteren Abschnitt 6 mit einer Fallfensterscheibe 7. Die Fallfensterscheibe 7 ist in einer abgesenkten Stellung gezeigt, der Verlauf ihrer oberen Kante 8 ist komplementär zum Träger 4 und einem daran anschließenden vorderen Abschnitt eines sich um die Fensteröffnung 3 erstreckenden Rahmens 9. Ein Großteil der Fallfensterscheibe 7 ist in der abgesenkten Stellung in einem unteren Teil 10 der Tür verborgen. Das Verhältnis von Höhe h zu Breite b der Fensteröffnung 3 ist größer als für PKW üblich, im gezeigten Fall beträgt es ca. 0,85.

Ein oberer Randbereich 37 einer Frontscheibe 36 ist in Fig. 1 kreuzschraffiert, um eine an dieser Stelle an sich bekannte, als Blend- und Hitzeschutz dienende dunkle Tönung anzudeuten. Die feste Fensterscheibe 5 ist in entsprechender Weise getönt. Die Fallfensterscheibe 7 ist klar oder deutlich schwächer getönt. Der Träger 4 erstreckt sich ungefähr in Höhe der Unterkante des Randbereichs 37.

Der vordere Abschnitt des Rahmens 9 trägt einen Außenspiegel 11.

Der untere Teil 10 der Tür 1 ist in Fig. 1 transparent dargestellt, um den Umriss eines Fahrersitzes 12 im Innern des Fahrzeugs zeigen zu können.

Der Rahmen 9 ist im hier gezeigten Fall zum Teil durch ein Karosserieblech gebildet, das sich durchgehend bis in den unteren Teil 10 der Tür 1 erstreckt. Des Weiteren kann er starre Profile umfassen, die sich - in der Ansicht der Fig. 1 durch das Karosserieblech verdeckt - um die Fensteröffnung 3 und in den unteren Teil 10 erstrecken.

Fig. 2 zeigt eine zur Montage in dem Rahmen 9 vorgesehene Fensterbaugruppe 13. Die Fensterbaugruppe 13 umfasst drei Führungsprofile, ein vorderes 14, ein oberes 15 und ein hinteres 16. Im montierten Zustand der Fig. 1 sind die Führungsprofile 14, 15, 16 in den starren Profilen des Rahmens 9 eingefügt; einer alternative zufolge können die Führungsprofile 14, 15, 16 starr und belastbar genug sein, um selber den Rahmen 9 zu bilden.

Vorderes und hinteres Profil 14, 16 sind durch den an ihnen befestigten Träger 4 verbunden, um eine sich rund um die feste Fensterscheibe 5 erstreckende Einfassung zu bilden. Unterhalb des Trägers 4 sind die Profile 14, 16 ferner durch einen Steg 17 verbunden, dessen Verlauf den der Unterkante der Fensteröffnung 3 nachbildet. Ein Stück des Führungsprofils 14 erstreckt sich über den Steg 17 hinaus nach unten, so dass es nach Einbau der Fensterbaugruppe 13 in die Tür 1 in deren unterem Teil 10 Platz findet.

Fig. 3 zeigt einen schematischen Schnitt durch den Träger 4 entlang der in Fig. 3 mit III-III bezeichneten Ebene. Der Träger 4 hat einen H-förmigen Querschnitt mit einer oberen Nut 18, die einen Rand der festen Fensterscheibe 5 aufnimmt, und einer unteren Nut 19, die vorgesehen ist, um eine obere Kante der (in Fig. 3 nicht gezeigten) Fallfensterscheibe 7 aufzunehmen und zu diesem Zweck eine die Fallfensterscheibe 7 führende Nut 20 des vorderen Führungsprofils 14 bündig anschließt.

Die Nuten 18, 19 können jeweils von einer elastischen Dichtung 21, 22 ausgekleidet sein, die als von einem starren Profil 23 des Trägers 4 getrenntes Bauteil ausgeführt und in Nuten des Profils 23 eingefügt sind; insbesondere kann die Dichtung 21 der festen Fensterscheibe 5 an letztere ringförmig angespritzt sein, und/oder die Dichtung 22 kann sich kontinuierlich einteilig entlang der Profile 14, 16 unterhalb des Trägers und des Trägers 4 selbst erstrecken. Denkbar ist auch, dass diese Dichtung 22 sich bis über die Enden der Profile 14, 16 hinaus erstreckt, um einen kontinuierlichen Führungsübergang der Fallscheibe 7 zwischen den Profilen 14, 16 der Fensterbaugruppe und solchen des unteren Teils 10 der Tür zu gewährleisten.

Einer alternativen Ausgestaltung zufolge sind die Dichtungen 21, 22 an das Profil 23 stoffschlüssig angeformt. In diesem Fall kann eine weitere Dichtung sich kontinuierlich einteilig entlang der Führungsprofile 14, 15, 16 erstrecken und so jeweils auf einem Teil ihrer Länge die Fallfensterscheibe 7 und auf einem anderen die feste Fensterscheibe 5 einfassen.

Jenseits der Schnittebene der Fig. 3 weist der Träger 4 Finger 24, 25 auf, die an Außen- und Innenseite des Führungsprofils 14 anliegen. Fig. 4 zeigt einen Schnitt entlang dieser Finger 24, 25 in der in Fig. 2 und 3 mit IV-IV bezeichneten Ebene.

Um den Träger 4 fest am Führungsprofil 14 zu verankern, erstreckt sich hier eine Schraube 26 durch Löcher des Fingers 25, eines inneren Schenkels 27 des Führungsprofils 14, eines in die Nut des Führungsprofils 14 eingreifenden Fingers 28 des Trägers 4 und ggf. eines äußeren Schenkels 29 des Führungsprofils 14. Eines der Löcher hat ein Innengewinde. Der Finger 24 dient hier lediglich dazu, die Löcher zu verdecken. Anstelle der Schraube 26 könnte auch ein die Finger des Trägers 4 und Schenkel des Führungsprofils 14 kreuzender Niet oder ein in anderer Weise in den Löchern verankerter Stift dienen.

Eine alternative Verbindung zwischen dem Träger 4 und den Führungsprofilen 14, 16 ist in Fig. 5 in einem Schnitt senkrecht zu den Ebenen III-III und IV-IV, entlang der Nuten des Trägers 4 und der Führungsprofile 14, 16 gezeigt. In die Schenkel 27, 29 verbindenden Mittelstücke 30 der Führungsprofile 14, 16 ist in Höhe des Trägers 4 jeweils eine Öffnung 31 geschnitten. Die in das Führungsprofil 14 eingreifenden Finger 28, 32 haben jeweils eine Spitze 33, 34, die in die Öffnung 31 eintaucht und den Träger 4 formschlüssig an den Führungsprofilen 14, 16 fixiert. Der Formschluss kann zustandekommen, indem die Führungsprofile 14-16 um den Träger 4 herumgebogen und dabei auf dessen Spitzen 33, 34 aufgespießt werden; in der Ausgestaltung der Fig. 5 ist die Spitze 35 relativ zum Finger 32 linear beweglich und von einer Feder 35 nach außen beaufschlagt, so dass die Montage des Trägers 4 erfolgen kann, indem zunächst die Spitze 33 in die Öffnung 31 des Führungsprofils 14 eingesteckt und dann der Träger 4 in der Ebene der Fig. 4 geschwenkt wird, um den gegenüberliegenden Finger 32 in die Nut des Führungsprofils 16 einzuführen und dabei die Spitze 34 zurückzudrängen, bis sie die Öffnung 31 des Führungsprofils 16 erreicht und in diese einrastet.

### Bezugszeichen

- 1: Fahrzeugtür
- 2: oberer Teil (von 1)
- 3: Fensteröffnung
- 4: Träger
- 5: feste Fensterscheibe
- 6: unterer Abschnitt (von 3)
- 7: Fallfensterscheibe
- 8: obere Kante (von 7)
- 9: Rahmen
- 10: unterer Teil (von 1)
- 11: Außenspiegel
- 12: Fahrersitz
- 13: Fensterbaugruppe
- 14: vorderes Führungsprofil
- 15: oberes Führungsprofil
- 16: hinteres Führungsprofil
- 17: Steg
- 18: obere Nut
- 19: untere Nut
- 20: Nut (von 14)
- 21: Dichtung
- 22: Dichtung
- 23: Profil
- 24: Finger
- 25: Finger
- 26: Schraube
- 27: innerer Schenkel
- 28: Finger
- 29: äußerer Schenkel
- 30: Mittelstück
- 31: Öffnung
- 32: Finger
- 33: Spitze
- 34: Spitze
- 35: Feder
- 36: Frontscheibe
- 37: oberer Randbereich

## Patentansprüche

1. Fensterbaugruppe (13) für eine Fahrzeugtür (1), umfassend eine Fensterführung für eine Fallfensterscheibe (7) mit einem in Einbaulage vorderen und einem hinteren Führungsprofil (14, 16), die an ihren oberen Enden durch ein oberes Führungsprofil (15) verbunden sind, einem Träger (4), der mittlere Abschnitte des vorderen und des hinteren Führungsprofils (14, 16) verbindet, und einer zwischen dem oberen Führungsprofil (15) und dem Träger (4) eingefassten festen Fensterscheibe (5), **dadurch gekennzeichnet, dass** der Träger (4) wenigstens einen in eine Nut (20) des vorderen und/oder des hinteren Führungsprofils (14, 16) eingreifenden Finger (28) und/oder einen an einer Innen- oder Außenseite des vorderen und/oder des hinteren Führungsprofils (14, 16) anliegenden Finger (24, 25) aufweist und ein Stift den wenigstens einen Finger (24, 25, 28) und das vordere und/oder hintere Führungsprofil (14, 16) kreuzt.

2. Fensterbaugruppe nach Anspruch 1, bei der der Abstand des Trägers (4) zu unteren Enden des vorderen und des hinteren Führungsprofils (14, 16) größer ist als zu einem höchsten Punkt des oberen Führungsprofils (15).

3. Fensterbaugruppe nach Anspruch 1 oder 2, bei der wenigstens ein Steg (17) untere Bereiche des vorderen und des hinteren Führungsprofils (14, 16) verbindet.

4. Fensterbaugruppe nach einem der vorhergehenden Ansprüche, bei der der Träger (4) wenigstens eine Nut (18, 19) aufweist, die bündig an eine Nut (20) des vorderen und des hinteren Führungsprofils (14, 16) anschließt.

5. Fensterbaugruppe nach einem der vorhergehenden Ansprüche, bei der die feste Fensterscheibe (5) von einer umlaufenden Dichtung eingefasst ist.

6. Fensterbaugruppe nach einem der Ansprüche 1 - 4, bei der das vordere und/oder das hintere Führungsprofil (14, 16) eine Dichtung umfasst, die den Träger (4) kreuzt.

7. Fensterbaugruppe nach Anspruch 1, bei der eine Spitze (33, 34) des in die Nut (20) eingreifenden Fingers (28, 32) in eine Aussparung (31) am Boden der Nut (20) eingreift.

8. Fensterbaugruppe nach einem der Ansprüche, bei der die feste Fensterscheibe (5) getönt ist.

9. Fahrzeugtür (1) mit einem eine Fensteröffnung (3) aufweisenden oberen Teil (2), einem unteren Teil (10), einer der Fensteröffnung (3) zugeordneten Fensterbaugruppe (13) nach einem der Ansprüche 1 - 8 und einer Fallfensterscheibe (7), die zwischen einer zumindest weitgehend in dem unteren Teil (10) versenkten Offenstellung und einer an den Träger (4) anschlagenden Offenstellung verstellbar ist.

10. Fahrzeugtür nach Anspruch 9, bei der das vordere und/oder das hintere Führungsprofil (14, 16) über eine Unterkante der Fensteröffnung (3) hinaus in den unteren Teil reicht.

11. Fahrzeugtür nach Anspruch 9 oder 10, bei der das Verhältnis von Höhe zu Breite der Fensteröffnung (3) wenigstens 0,75, vorzugsweise wenigstens 0,8, besonders bevorzugt wenigstens 0,85 beträgt.

12. Fahrzeug, insbesondere Bus oder Lastwagen, mit einer Fensterbaugruppe (13) nach einem der Ansprüche 1 bis 8 oder einer Fahrzeugtür (1) nach Anspruch 9, 10 oder 11.

## Claims

1. A window assembly (13) for a vehicle door (1), comprising a window guide for a drop window pane (7) having, in the installed position, a front and a rear guide profile (14, 16) connected at their upper ends by an upper guide profile (15), a support (4) connecting central sections of the front and rear guide profiles (14, 16), and a fixed window pane (5) sandwiched between the upper guide profile (15) and the support (4), **characterized in that** the support (4) has at least one finger (28) engaging in a groove (20) of the front and/or rear guide profiles (14, 16) and/or a finger (24, 25) resting against an inner or outer side of the front and/or rear guide profiles (14, 16), and a pin engages the at least one finger (24, 25, 28) and crosses the front and/or rear guide profiles (14, 16).

2. Window assembly according to claim 1, wherein the distance of the support (4) from the lower ends of the front and rear guide profiles (14, 16) is greater than from a highest point of the upper guide profile (15).

3. Window assembly according to claim 1 or 2, wherein at least one web (17) connects lower regions of the front and rear guide profiles (14, 16).

4. Window assembly according to one of the preceding claims, wherein the support (4) has at least one groove (18, 19) that adjoins a groove (20) of the front and rear guide profiles (14, 16) flush.

5. Window assembly according to one of the preceding claims, wherein the fixed window pane (5) is enclosed by a circumferential seal.

6. Window assembly according to one of claims 1-4, wherein the front and/or rear guide profile (14, 16) comprises a seal that crosses the support (4).

7. Window assembly according to claim 1, wherein a tip (33, 34) of the finger (28, 32) engaging in the groove (20) engages in a recess (31) at the bottom of the groove (20).

8. Window assembly according to one of claims, wherein the fixed window pane (5) is tinted.

9. A vehicle door (1) comprising an upper part (10) (2) having a window opening (3), a lower part (10), a window assembly (13) according to one of claims 1-8 associated with the window opening (3), and a drop-down window pane (7) that is adjustable between an open position at least largely recessed into the lower part (10) and an open position abutting against the support (4).

10. A vehicle door according to claim 9, wherein the front and/or rear guide profile (14, 16) extends beyond a lower edge of the window opening (3) into the lower part.

11. A vehicle door according to claim 9 or 10, wherein the height-to-width ratio of the window opening (3) is at least 0.75, preferably at least 0.8, particularly preferably at least 0.85.

12. A vehicle, in particular a bus or truck, comprising a window assembly 25 (13) according to one of claims 1 to 8 or a vehicle door (1) according to claim 9, 10, or 11.

## Revendications

1. Ensemble de vitre (13) pour portière de véhicule (1), comprenant un guide de vitre pour vitre abattante (7) présentant, en position montée, un profilé de guidage avant et un profilé de guidage arrière (14, 16) reliés à leurs extrémités supérieures par un profilé de guidage supérieur (15), un support (4) reliant les sections centrales des profilés de guidage avant et arrière (14, 16), et une vitre fixe (5) prise en sandwich entre le profilé de guidage supérieur (15) et le support (4). Ce support (4) est **caractérisé en ce qu'**il comporte au moins un doigt (28) s'engageant dans une rainure (20) des profilés de guidage avant et/ou arrière (14, 16) et/ou un doigt (24, 25) s'appuyant contre un côté intérieur ou extérieur des profilés de guidage avant et/ou arrière (14, 16), et **en ce qu'**un axe s'engage dans le ou les doigts (24, 25, 28) et traverse les profilés de guidage avant et/ou arrière (14, 16).

2. Ensemble de fenêtre selon la revendication 1, dans lequel la distance entre le support (4) et les extrémités inférieures des profilés de guidage avant et arrière (14, 16) est supérieure à celle du point le plus haut du profilé de guidage supérieur (15).

3. Ensemble de fenêtre selon la revendication 1 ou 2, dans lequel au moins une âme (17) relie les zones inférieures des profilés de guidage avant et arrière (14, 16).

4. Ensemble de fenêtre selon l'une des revendications précédentes, dans lequel le support (4) présente au moins une rainure (18, 19) affleurant une rainure (20) des profilés de guidage avant et arrière (14, 16).

5. Ensemble de fenêtre selon l'une des revendications précédentes, dans lequel la vitre fixe (5) est entourée d'un joint périphérique.

6. Ensemble de fenêtre selon l'une des revendications 1 à 4, dans lequel le profilé de guidage avant et/ou arrière (14, 16) comprend un joint traversant le support (4).

7. Ensemble de fenêtre selon la revendication 1, dans lequel une extrémité (33, 34) du doigt (28, 32) s'engageant dans la rainure (20) dans un évidement (31) au fond de la rainure (20).

8. Ensemble de fenêtre selon l'une des revendications, dans lequel la vitre fixe (5) est teintée.

9. Portière de véhicule (1) comprenant une partie supérieure (10) (2) présentant une ouverture de fenêtre (3), une partie inférieure (10), un ensemble de fenêtre (13) selon l'une des revendications 1 à 8 associé à l'ouverture de fenêtre (3), et une vitre abattante (7) réglable entre une position ouverte au moins largement encastrée dans la partie inférieure (10) et une position ouverte en butée contre le support (4).

10. Portière de véhicule selon la revendication 9, dans laquelle le profilé de guidage avant et/ou arrière (14, 16) s'étend au-delà du bord inférieur de l'ouverture de fenêtre (3) jusque dans la partie inférieure.

11. Portière de véhicule selon la revendication 9 ou 10, dans laquelle le rapport hauteur/largeur de l'ouverture de fenêtre (3) est d'au moins 0,75, de préférence d'au moins 0,8, et plus particulièrement d'au moins 0,85.

12. Véhicule, notamment bus ou camion, comprenant un ensemble fenêtre (13) selon l'une des revendications 1 à 8 ou une portière de véhicule (1) selon la revendication 9, 10 ou 11.
